# EUROPÄISCHE PATENTANMELDUNG

(11) **EP 1 973 352 A2**
(43) Veröffentlichungstag der Anmeldung: **24.09.2008**
(21) Anmeldenummer: 08153076.8
(22) Anmeldetag: 20.03.2008
(51) Int. Cl.: H04N 17/00

(54) **Diagnose für Kamerasysteme**

(30) Priorität: 20.03.2007 DE 102007013400
(71) Anmelder: RIED Systems Electronic GmbH, 85640 Putzbrunn (DE)
(72) Erfinder: Ried, Christian, 85640 Putzbrunn (DE)
(74) Vertreter: Vogeser, Werner

(57) **Zusammenfassung**

Die Erfindung betrifft ein Testverfahren zur Fehlerortung in einem mobilen Kamera-Monitor-System sowie ein Testset für mobile Bildverarbeitungssysteme, welches mit geringem technischen und finanziellen Aufwand eine schnelle Fehlerortung und wenn möglich auch eine beschleunigte Behebung des Fehlers ermöglicht mit Kamera, Monitor, gegebenenfalls einem Zusatzgerät und Kabelstrecken sowie Steckerverbindungen, insbesondere in Fahrzeugen, an einer Steckverbindung angeschlossen und wobei die dann damit verbundene Komponente samt dazwischen liegender Kabelstrecke getestet wird, wobei ein Adapter ausgewählt wird, dessen eine Ende zu der Steckverbindung der ausgewählten Anschlussstelle am System passt und dessen andere Ende zum Testgerät passt. Ein Testgerät für die zu prüfende Komponentenart wird an der ausgewählten Anschlussstelle angeschlossen und der Test für diese Komponente und die zur Anschlussstelle führende Kabelstrecke durchgeführt. Bei einer Fehlermeldung wird das Testgerät an der zuvor mitgetesteten Komponente direkt angesteckt und der Test wiederholt. Bei einem positiven Testergebnis wird ein Test der anderen Komponente und der zur Anschlussstelle führenden Kabelstrecke durchgeführt. Bei einer Fehlermeldung wird das Testgerät direkt an dieser nunmehr mitgetesteten Komponente angeschlossen und der Test wird erneut durchgeführt.

## Beschreibung

### I. Anwendungsgebiet

Die Erfindung betrifft ein Testverfahren sowie ein Testset für mobile Bildverarbeitungssysteme.

### II. Technischer Hintergrund

Vor allem Nutzfahrzeuge werden in Zukunft in vielen Ländern standardmäßig und gesetzlich vorgeschrieben mit Bildverarbeitungssystemen (automative Kamerasysteme) ausgestattet sein, um die Unfallgefahren zu mindern.

Während in der Vergangenheit hauptsächlich Rückfahrkameras an Bussen und LKWs montiert waren, deren Sichtfeld der Fahrer über einen Monitor beobachten konnte, werden nunmehr auch Kameras im vorderen Bereich eines LKWs oder Nutzfahrzeuges montiert, um den vom Fahrer abgewandten Frontbereich, oder den Bereich unmittelbar vor und unterhalb der Frontscheibe, zu überwachen.

Sofern derartige Bildverarbeitungssysteme für Nutzfahrzeuge gesetzlich vorgeschrieben sind, darf das Fahrzeug nicht mehr betrieben werden, sobald eine der Komponenten des Systems und damit das System insgesamt nicht voll funktionsfähig ist.

Die Betreiber der Fahrzeuge drängen deshalb bei einem Fehler des Bildverarbeitungssystems ihre Servicewerkstätten zu einer schnellen Reparatur, auf jeden Fall mit Standzeiten von unter 8 Stunden, möglichst von nur 1 bis 2 Stunden.

Diese Forderung können die Servicewerkstätten derzeit jedoch aus mehreren Gründen kaum erfüllen:
- Zum einen handelt es sich bei den Servicewerkstätten meist um markenspezifische Servicewerkstätten bezogen auf den Hersteller des Fahrzeugchassis, d. h. Mercedes Benz, Volvo, MAN usw.
- Bei der Auslieferung des Fahrzeuges liefern diese Hersteller jedoch meist das Rohfahrzeug (Chassis mit Führerhaus) an einen spezialisierten Aufbautenhersteller aus, der einen kundenspezifischen Aufbau montiert.
- Die Aufbautenhersteller sind größtenteils jedoch mittelständisch orientiert, so dass es eine große Anzahl solcher Aufbautenhersteller gibt. Die Bildverarbeitungssysteme werden in der Regel erst von den Aufbautenherstellern montiert, oder sogar anschließend von einem speziellen Fahrzeugausstatter.

Erst in der jüngsten Vergangenheit wurde dazu übergegangen, dass der Fahrzeughersteller in der Fahrerkabine bereits einen Monitor installiert.
- Die einzelnen Komponenten der Bildverarbeitungssysteme (vor allem Kameras und Monitore) werden separat von einer Vielzahl von Elektronikherstellern vor allem aus Asien angeboten und vertrieben. Wegen der schnellen Entwicklung im Elektronikbereich werden derartige Gerätetypen oder gar Serien immer nur eine begrenzte Zeit hergestellt und dann durch ein Nachfolgemodell bzw. eine Nachfolgeserie ersetzt, die sich vom Vorgängermodell unterscheiden.

Die Folge ist, dass an z. B. einem LKW einer bestimmten Herstellermarke wie Mercedes Benz, welches mit beschädigtem Bildverarbeitungsystem in eine Mercedes-Benz-Niederlassung gebracht wird, abhängig von Baujahr, Aufbautenhersteller und von diesem ausgewählten Komponenten, eine bestimmte aus hunderten verschiedener am Markt in der Vergangenheit befindlicher Kameras und ebenso einer von hunderten verschiedener Monitore verbaut ist, sowie für die Kabelstrecken und Steckerverbindungen Materialien, die ebenfalls der Aufbautenhersteller ausgewählt hat.

Auch die Verlegestrecken dieser Kabel sind abhängig vom Aufbautenhersteller von diesem nach Belieben gewählt, teilweise zugänglich auf den Außenseiten des Chassis, teilweise in umschlossenen Hohlräumen des Chassis, dort teilweise fest eingeschäumt oder lose verlegt usw.

Das größte Problem für die Servicewerkstatt besteht nun darin, die fehlerhafte Komponente zu orten:

Die einfachste Methode besteht darin, die vermutlich fehlerhafte Komponente durch eine fehlerfreie Komponente zu ersetzen und zu testen, ob das System danach arbeitet.

Hierfür müsste die Servicewerkstatt jedoch eine Vielzahl unterschiedlicher Monitore, Kameras und auch Kabelstrecken und Steckverbindungen vorrätig haben, was bei dem schnellen Wechsel und der großen Anzahl am Markt verfügbarer Komponenten für die meist relativ kleinen Servicewerkstätten völlig unmöglich ist.

Einfache elektrische Tests wie Durchgangsprüfungen einzelner Pins oder Adern sind jedoch in aller Regel nicht ausreichend oder müssen in sehr zeitaufwendigen Kombinationsverfahren durchgeführt werden, um damit die Fehlerquelle im System lokalisieren zu können.

Für die Servicewerkstätten bedeutet dies, dass sie in der Regel dann doch länger als 8 Stunden für eine solche Reparatur benötigen, wobei 90% der Reparaturzeit für die Fehlerlokalisierung verwendet werden.

Ein weiteres Problem besteht dann in der Beschaffung einer geeigneten Ersatzkomponente, denn häufig ist die exakt gleiche, wie die fehlerhafte Komponente, nicht mehr verfügbar.

Angesichts der Tatsache, dass die Komponenten der Bildverarbeitungssysteme starken Erschütterungen und damit Belastungen über lange Zeiträume ausgesetzt sind, und vor allem die Kamerasysteme, Kabelstrecken und Steckerverbindungen zum Teil auch noch aggressiven Umgebungseinflüssen (Witterung, Streusalz etc.) ausgesetzt sind, sind die Störungen an diesen Bildverarbeitungssystemen relativ häufig und damit die Ausfallzeiten für die Fahrzeugbetreiber hoch.

### III. Darstellung der Erfindung

### a) Technische Aufgabe

Es ist daher die Aufgabe gemäß der Erfindung, ein Testverfahren und ein Testset zu schaffen, welches mit geringem technischen und finanziellen Aufwand eine schnelle Fehlerortung und wenn möglich auch eine beschleunigte Behebung des Fehlers ermöglicht.

### b) Lösung der Aufgabe

Diese Aufgabe wird durch die Merkmale der Ansprüche 1 und 11 gelöst. Vorteilhafte Ausführungsformen ergeben sich aus den Unteransprüchen.

Zur Fehlerortung ist der Anschluss eines entsprechenden Testgerätes meist an nicht nur einer, sondern mehreren Anschlussstellen hintereinander notwendig, wobei als Testgerät zumindest ein Monitor-Testgerät und ein Kamera-Testgerät zur Verfügung stehen (die auch in einem Gerät funktionsvereinigt seien können), unter Umständen auch ein separates Testgerät für Kabelstrecken.

Zunächst muss ein Adapter in Form eines Kabelstückes mit entsprechenden Steckverbindungen an den Enden ausgewählt werden, welches am einen Ende zu der ausgewählten Anschlussstelle und am anderen Ende zu dem ausgewählten Testgerät passt. Dabei ist es in aller Regel ausreichend, dass lediglich die Form des Steckers am Ende des Adapters zu dem entsprechenden Gegenstück an der Anschlussstelle beziehungsweise am Testgerät hardwaremäßig passt, während die Pinbelegung auf der Fahrzeugseite dabei unerheblich ist.

Da die Anzahl der bei solchen Systemen verwendeten Steckverbindungen relativ begrenzt ist ( ca.10 unterschiedliche Steckerarten sind hierbei üblich ), muss von der Servicewerkstatt auch nur eine relativ begrenzte Anzahl von Adaptern vorgehalten werden, wobei die Adapter vorzugsweise so gestaltet sind, dass sie am testgeräteseitigen Ende sowohl zum Kamera-Testgerät als auch zum Monitor-Testgerät als auch - sofern vorhanden - zum Kabelstrecken-Testgerät passen.

Auch die Anschlussstelle, die zuerst benutzt wird, wird in aller Regel nicht völlig willkürlich ausgewählt, sondern in der Regel hat man bereits einen Anfangsverdacht, welche Komponente (eine Kamera oder der Monitor) defekt ist und wählt als Anschlussstelle entweder die dieser Komponente nächstliegende Anschlussstelle oder eine von dieser Komponente möglichst weit entfernt liegende Anschlussstelle, wenn man sich nicht sicher ist, ob der Fehler nicht auch in der Kabelstrecke liegen kann.

Die aktiven Komponenten (Kameras und Monitore), wobei an einem System meist nur ein Monitor, aber mehrere Kameras vorhanden sind, verfügen jeweils über nur ein kurzes eigenes Kabelstück mit einem Stecker am Ende, mit dem sie an den Kabelstrang des Gesamtsystems angeschlossen werden.

Weiter Steckverbindungen sind meist der Übergang von der Fahrerkabine zum Aufbau und auch die Anschlussstelle am hinteren Ende des Zugfahrzeuges zum Anschluss eines Anhängers oder Sattelaufliegers.

Geht man von dem häufigen Fall aus, dass zu Beginn nicht klar ist, ob die Fehlerquelle an einer aktiven Komponente oder an einer Kabelstrecke liegt, so wird man zunächst an einer Anschlussstelle anschließen, die auch eine lange Kabelstrecke mit umfasst und darüber hinaus leicht zugänglich ist, was in der Regel die Anschlussstelle nach hinten zum Anhänger/Auflieger ist.

Schließt man dort über den passenden Adapter zunächst beispielsweise das Monitor-Testgerät an, so kann der Monitor mit allen seinen Funktionen gestestet werden.

Verläuft dieser Test ohne Beanstandung, so ist bereits klar, dass sowohl der Monitor funktioniert als auch die von der gewählten Anschlussstetelle bis zum Monitor führende Kabelstrecke in Ordnung ist.

Verläuft dieser Test negativ, so wird er an der dem Monitor nächst liegenden Anschlussstelle, also der Anschlussstelle direkt am Monitor, wiederholt, unter Verwendung des Monitor-Testgerätes und häufig auch des gleichen Adapters.

Ist das Ergebnis wieder negativ, ist die defekte Komponente gefunden, nämlich der Monitor, und wird ausgetaucht um das Fahrzeug wieder einsatzbereit zu haben. In diesem Fall wird mit Hilfe des Monitor-Testgeräts auch die Pinbelegung und gegebenenfalls weitere Parameter des Monitorsteckeranschlusses mit dem Messgerät ermittelt, um als Ersatzmonitor einen passenden Monitor auswählen zu können, wenn ein baugleicher Monitor nicht verfügbar sein sollte.

Ist das Ergebnis dieses zweiten Test dagegen positiv, so ist klar, dass der Fehler auf der Kabelstrecke zwischen der ersten Anschlussstelle und der Monitor-Steckerverbindung liegt, und wird - gegebenenfalls unter Verwendung eines speziellen Kabel-Testgerätes - im Detail ermittelt, sofern das Testergebnis an der ersten Anschlussstelle negativ war.

Waren bis zu diesem Punkt beide Tests positiv, ist klar, dass auf der Monitorseite einschließlich des mitgetesteten Kabelstranges kein Defekt vorliegt, und es werden nunmehr die einzelnen Kameras mit Hilfe des Kamera-Testgerätes getestet:

Dies kann entweder von der gleichen, zum Beispiel Anhänger-Anschlussstelle aus erfolgen, indem nach Anschluss des Testgerätes nacheinander die einzelnen Kameras aktiviert werden, also meist vom Fahrerhaus aus ein- und ausgeschaltet werden.

Sollte sich auf diese Art und Weise eine defekte Kamera nicht eindeutig ermitteln lassen, wird der Test für die einzelnen Kameras von der jeweiligen der Kamera nächstliegenden Anschlussstelle aus für jede Kamera wiederholt.

Auch hierbei werden entweder grundsätzlich alle Kamerafunktionen überprüft oder nur die als defekt gemeldete Funktion.

Im Einzelnen können folgende Test /Überprüfungen durchgeführt werden:

Beim Testen der Kamera
- wird zunächst einmal die Kamera nicht von der Fahrzeugelektrik sondern vom Kamera-Testgerät aus mit Betriebspannung versorgt, um zunächst sicher zu stellen, dass von Seiten der Betriebsspannung her alles in Ordnung ist.
- Hierzu wird die von der Kamera benötigte Betriebsspannung zunächst automatisch vom Kamera-Testgerät ermittelt, aufgeschaltet und auch am Testgerät angezeigt,
- in dem zur Kamera führenden Kabelstrang wird auch auf Kurzschluss getestet,
- der vom Mikrofon der Kamera empfangene Ton wird am Testgerät akustisch wiedergegeben,
- die automatische Schutzklappe (13) der Kamera wird auf ihre Bewegungsfunktion getestet und vom Testgerät aus bewegt,
- ebenso wird die Heizung der Kamera aktiviert,
- und die Spiegelungsfunktion der Kamera ein- und ausgeschaltet und die entsprechende Bilddarstellung im Kamera-Testgerät, welches ja über einen Monitor verfügt, dargestellt
- ebenso wird die steuerbare Bewegung der Kamera, also Blickrichtung der Kamera und gegebenenfalls deren Zoom, getestet,
- es wird die Größe des Videosignalpegels, welches von der Kamera geliefert wird, am Kamera-Testgerät angezeigt und gegebenenfalls auch die Bildnorm des Kamera -Signals.
- falls die Kamera über weitere Sonderfunktionen verfügt, können auch diese getestet werden.

Beim Testen des Monitors wird dieser
- zunächst nacheinander mit den gängigen Videoausgangssignalen beaufschlagt, also meist dem PAL- und dem MTSC-Ausgangssignal,
- ferner wird der Monitor mit einem Signal für ein Farbbalkendiagram beaufschlagt, um festzustellen, ob der Farbabgleich des Monitors korrekt durchgeführt wurde,
- ebenso kann der Monitor mit einem Signal eines Kreistestbildes beaufschlagt werden, um den geometrischen Monitorabgleich zu prüfen,
- dabei kann die Signalbeauschlagung des Monitors von Farbe auf schwarz-weiß verstellt werden,
- der Monitor kann auch von zwei unterschiedlichen Kamerasignalen mit unterschiedlichen Testbildern gleichzeitig beaufschlagt werden, um festzustellen, ob der Monitor eine solche gleichzeitige Beaufschlagung verkraftet
- im Testbild des Monitors wird eine Schrift eingeblendet mit deren Hilfe das Funktionieren der Spiegelbildfunktion getestet wird und
- der Monitor wird mit einem abgeschwächten, insbesondere in mehreren Stufen abgeschwächten, Videoausgangssignal beaufschlagt, um zu testen, ob der Monitor auch bei einem in der Praxis manchmal durch Verluste verringerten Signal noch eine ausreichende Anzeige liefert,
- ebenso wird der Monitor mit einem verstärkten Videoausgangssignal beaufschlagt um festzustellen, ob auch diese in der Praxis manchmal auftretende Störungsquelle vom Monitor verkraftet wird,
- ebenso wird der Lautsprecher des Monitors mit einem Audiosignal beaufschlagt und dadurch getestet und
- die vom Monitor abgegebenen Steuerspannungen, insbesondere für die Funktion von Schutzklappe, Stromversorgung, Heizung, der Kamera angezeigt.

Bei all dem wird auch die von der Fahrzeugelektronik zur Verfügung gestellte Betriebsspannung für den Monitor vom Testgerät gemessen ebenso wie die Spannung bei Aktivierung des Monitors durch Einlegen des Rückwärtsganges.

Falls sich eine Kabelstrecke als Fehlerquelle herausgestellt hat und die Kabelstrecke seperat getestet werden muss, wird dabei zunächst eine automatische Erkennung der Pinbelegung des Kabels durchgeführt und dabei auch automatisch die Videoader des Kabels erkannt und am Testgerät angezeigt,
am Testgerät wird fernen angezeigt, zu welchem Komponentenhersteller die erkannte Pinbelegung passt, wobei dies in der Praxis auch mehrer Komponentenhersteller sein können, und es wird automatisch für die einzelnen Pins des Kabelstranges nacheinander ein Testlauf auf Durchgang beziehungsweise Kurzschluss, insbesondere Signalverlust durchgeführt.

Für die Service-Werkstatt bietet dies also den Vorteil, dass die Fehlerquelle mit einigen wenigen Testdurchgängen ermittelt werden kann, und unter Vorhaltung eines relativ überschaubaren Testequipments in Form eines Testsets, welches lediglich umfasst
- eine begrenzte Anzahl von Adaptern,
- wenigstens ein Monitor-Testgerät und ein Kamera-Testgerät.

Darüber hinaus wird durch die Möglichkeit der Ermittlung der Pinbelegung und der hierfür in Frage kommenden Komponenten Hersteller auch der Komponentenaustausch der defekten Komponente beschleunigt, indem nicht unbedingt eine zur defekten Komponente baugleiche Komponente beschafft werden muss, sondern lediglich eine zur Anschlussstelle der defekten Komponente kompatible Komponente, meist des gleichen Herstellers.

### c) Ausführungsbeispiele

Ausführungsformen gemäß der Erfindung sind im Folgenden beispielhaft näher beschrieben. Es zeigen:
- Fig. 1:: einen LKW in der Seitenansicht, ausgestatten mit einen Bildverarbeitungssystem,
- Fig. 2:: ein Kamera-Testgerät,
- Fig. 3:: ein Monitor-Testgerät und
- Fig. 4:: eine einzelne Kamera.

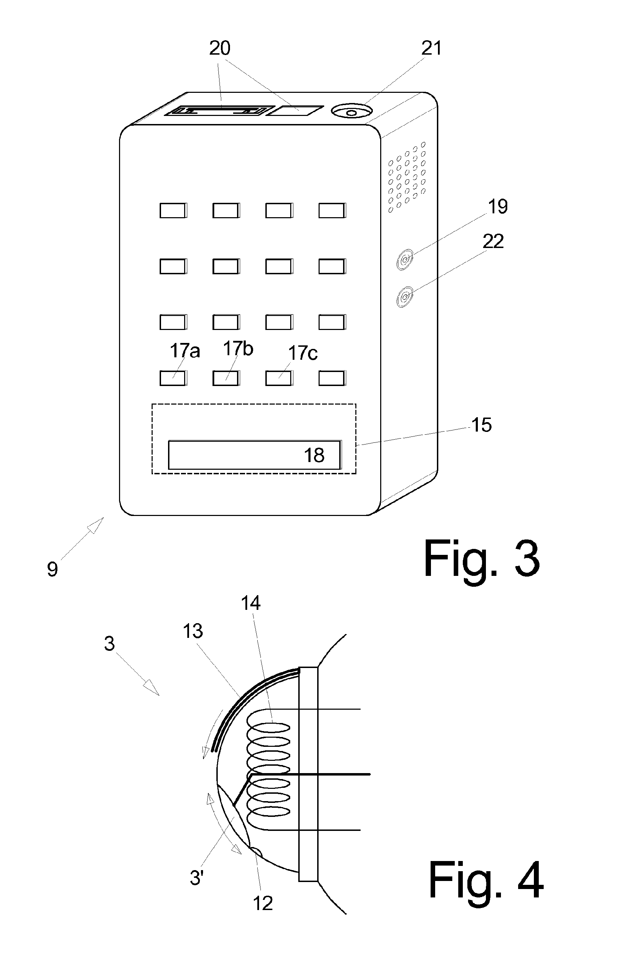

Anhand der Figur 4 sind zunächst die Einzelfunktionen einer Kamera 3 ersichtlich, nämlich
- die Funktion der Kameralinse 3',
- die Beweglichkeit, also die Änderung der Blickrichtung der Kameralinse 3',
- die Funktion des in die Kamera 3 integrierten Mikrofons,
- die Funktion der in die Kamera eingebauten Heizung 14, die ein Vereisen der Kamera verhindern soll und
- das Öffnen und Schließen der Schutzklappe 13, die die Kamera bei abgeschalteter Funktion mechanisch gegen Beschädigungen und Verunreinigungen schützen soll.

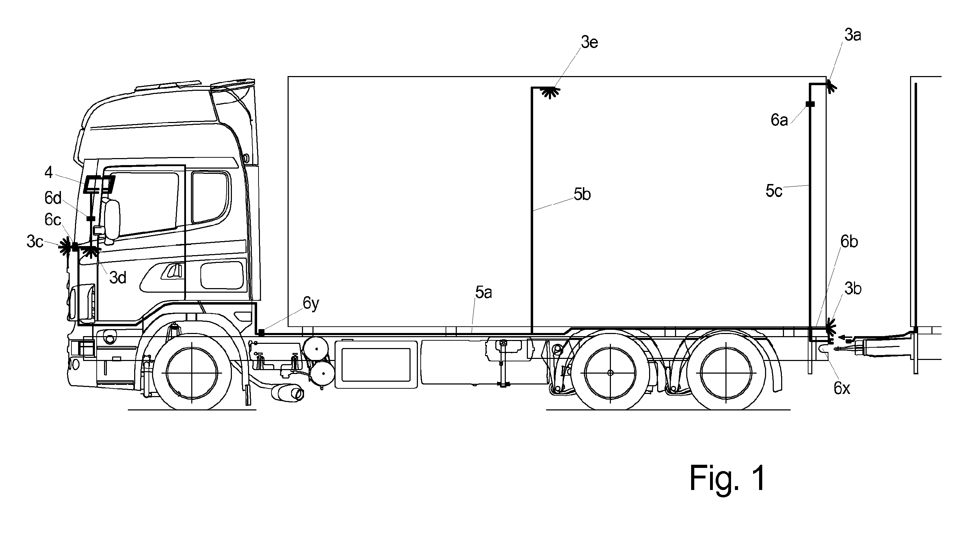

Figur 1 zeigt in Prinzip-Darstellung am Beispiel eines LKW-Zugfahrzeuges 1 mit Lastaufbau, welche Komponenten ein solches Bildverarbeitungssystem umfassen kann und wo diese Komponenten montiert sind:

In der Regel umfasst das System nur einen Monitor 4, der in der Fahrerkabine im Blickfeld des Fahrers, meist unter dem Dachhimmel, montiert ist.

Dagegen umfasst das System in der Regel mehrere Kameras 3abc..., von denen mindestens eine als Rückfahrkamera 3a am Heck des Fahrzeuges 1 dem Fahrer eine Sichtmöglichkeit beim Rüchwärtsfahren bieten soll.

Im vorliegenden Fall ist dabei eine Kamera 3a am Heck hoch liegend angeordnet, und eine weitere 3b am Heck an einem relativ tiefen Punkt befestigt, wobei an beiden Positionen auch je zwei Kameras, nämlich am linken und rechten Rand oder auch nur je eine in der Mitte, installiert sein kann.

Um auch im Frontbereich die schlecht einsehbaren Bereiche durch Kameras für den Fahrer einsehbar zu gestalten, ist eine weitere Kamera 3c unmittelbar unterhalb der Frontscheibe mit Blickrichtung steil nach unten angeordnet, um niedrige Hindernisse unmittelbar vor dem Fahrzeug 1 erkennen zu können.

Ebenso ist eine weiter Kamera 3d seitlich am Fahrerhaus mit Blick ebenfalls steil nach unten angeordnet, um niedrige Hindernisse unmittelbar seitlich neben dem Fahrerhaus erkennen zu können, und eine solche Kamera ist natürlich vorzugsweise an der Beifahrerseite angeordnet.

Des Weiteren kann eine separate Kamera 3e an der Seite des Lastaufbaus so angeordnet sein, dass diese Kamera den Bereich neben und unmittelbar vor den Hinterachsen überwacht, was beim Abbiegen des Fahrzeuges 1 ein besonders kritischer Bereich ist.

Alle Komponenten sind über Kabelstrecken 5a,b... miteinander verbunden, die nicht einstückig sind, sondern deren Teilstränge durch Steckverbinder 6a,b miteinander gekoppelt sind, wobei ein solcher Steckverbinder jeweils in geringer Entfernung der jeweiligen aktiven Komponente vorhanden ist, um diese Komponente vom Kabelstrang abkoppeln und austauschen zu können.

Eine wichtige Steckverbindung 6x ist dabei die Steckverbindung, mit der der in einem Überwachungssystem eines Anhängers vorhandene Kabelstrang an den des Zugfahrzeuges und dessen Monitor 4 angekoppelt werden kann. Weiterhin ist eine wichtige Steckverbindung 6y die Trennstelle der Kabelstränge zwischen Fahrerkabine und Aufbau, die vor allem dann von Bedeutung ist, wenn das vom Fahrzeughersteller gelieferte Chassis mit Fahrerhaus bereits den Monitor und den Kabelstrang im Fahrerhaus enthält, sodass von dieser Anschlussstelle aus dann vom Aufbautenhersteller der Rest des Systems weitergebaut werden kann.

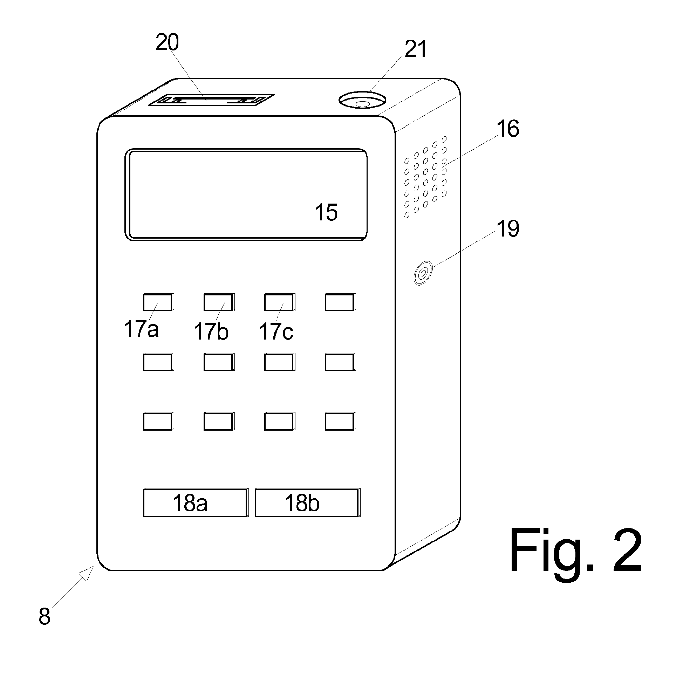

Figur 2 beispielhaft zeigt ein Kamera-Testgerät 8 in Form eines etwa quaderförmigen Gerätes von solcher Größe, dass es gut in einer Hand zu halten ist, welches auf der Frontseite, im oberen Bereich einen Bildschirm 15 besitzt und darunter eine Reihe von Tasten bzw. Anzeigeflächen.

Das Kamera-Testgerät 8 enthält Batterien für die Stromversorgung, aber auch an der Seite einen elektrischen Anschluss für ein elektrisches Netzteil zur Verbindung mit dem Stromnetz.

Ebenfalls ist in einer der Seiten der Lautsprecher 16 angeordnet, während eine fünfzehnpolige Steckerbuchse zum Anschließen einer zu testenden Kamera an der oberen Stirnfläche angeordnet ist.

Auf dem Bildschirm 15 kann das von der Kamera empfangene Bildsignal optisch dargestellt werden.

Von den vorhandenen Schaltern 17 auf der Frontseite, die vorzugsweise als Tastschalter ausgebildet sind, ist einer der Ein-/Ausschalter für den gesamten Kameratester, und weitere Schalter aktivieren an der angeschlossenen Kamera die Klappe, die Heizung, die Spiegelungsfunktion sowie die Verstellung von oben nach unten und umgekehrt.

Ebenso sind Schalter zum Beaufschlagen der Kamera mit Betriebsspannungen von 1 Volt, 0,775 Volt sowie 0,5 Volt vorhanden, sowie ein Schalter zum Umschalten zwischen NTSC- und PAL-Signal.

Von den Anzeigeflächen dienen mehrere Anzeigenflächen dazu, die von der angeschlossenen Kamera benutze Betriebsspannung (12 Volt, 11 Volt, 13 Volt) anzuzeigen.

Figur 3 zeigt eine perspektivische Darstellung eines beispielhaften Monitor-Testgerätes 9, welches den angeschlossenen Monitor mit einer Vielzahl von Signalen beaufschlagen kann.

Auch dieses Testgerät befindet sich in einem etwa quaderförmigen Gehäuse einer Größe, welche gut in einer Hand zu halten ist und besitzt an der vorderen Stirnfläche verschiedene Steckerbuchsen, insbesondere zwei Sub-D-Steckerbuchsen zum Simulieren zweier verschiedener Kameras, sowie eine BMC-Steckerbuchse.

Auch dieses Testgerät 9 enthält Batterien zur Verfügungsstellung der Betriebsspannung, darüber hinaus aber auch - in einer der Seitenflächen - einen elektrischen Anschluss für ein elektrisches Netzteil zur Verbindung mit dem Stromnetz.

Auf der Vorderseite sind wiederum eine Vielzahl von Schaltern und Anzeigeflächen angeordnet, davon eine ausgebildet als Digitalanzeige 18, vorzugsweise im unteren Bereich, an der die Spannung angezeigt wird, mit der der angeschlossene Monitor 4 beaufschlagt wird.

Von den Schaltern 17, die ebenfalls vorzugsweise als Tastschalter ausgeführt sind, ist einer der Ein-/Ausschalter für das gesamte Monitor-Testgerät 9.

Weitere Schalter bewirken die Umschaltung von Kamera 1 auf Kamera 2 und umgekehrt, die Umschaltung zwischen PAL- und NTSC-Signal, die Umschaltung zwischen Schwarz-Weiß- und Farbeaufschlagung des Monitors, die Beaufschlagung des Monitors mit 100%, 75% oder 50% Signalstärke, sowie die Betätigung der Schaltfunktionen von Klappe, Heizung, Mikrophon sowie die Bestätigung der Kamera insgesamt vom Monitor aus.

Ein weiterer Schalter dient dem Ein- und Ausschalten des Lautsprechers im Monitor und weitere Schalter dienen zum Beaufschlagen des angeschlossenen Monitors mit einem Farbbalkendiagramm, einem Farbabgleichbild oder einem anderen Testbild.

Alle Testgeräte können jeweils einen Schacht für die Speicherkarten aufweisen, auf denen
- Pinbelegungen,
- Steckerbelegungen,
- Reparaturhilfen,
- Bedienungsanleitungen
jeweils aktualisiert und hinterlegt sein können.

### BEZUGSZEICHENLISTE

- 1: LKW
- 2: Anhänger
- 3a, b: Kamera
- 3': Kameralinse
- 4: Monitor
- 5a, b: Kabelstrecke
- 6a, b: Steckverbinder
- 7a, b: Pins
- 8: Kamera-Testgerät
- 9: Monitor-Testgerät
- 10a, b: Adapter
- 10a1, 10a2: Ende
- 11: Kabeltestgerät
- 12: Mikrofon
- 13: Schutzklappe
- 14: Heizung
- 15: Bildschirm
- 16: Lautsprecher
- 17: Schalter
- 18: Digitalanzeige

## Patentansprüche

1. Verfahren zur Fehlerortung in einem mobilen Kamera-Monitor-System mit Kamera (3a,b), Monitor (4), gegebenenfalls einem Zusatzgerät als Komponenten und Kabelstrecken (5a,b) sowie Steckerverbindungen (6a,b...), insbesondere in Fahrzeugen, insbesondere in Autos, wobei ein Testgerät (8,9) an einer Steckverbindung (6a...) angeschlossen und die dann damit verbundene Komponente samt dazwischen liegender Kabelstrecke (5a,b) getestet wird,
**dadurch gekennzeichnet, dass**
- ein Adapter (10a,b) ausgewählt wird, dessen eine Ende (10a1) zu der Steckverbindung (6a) der ausgewählten Anschlussstelle am System passt und dessen anderes Ende zum Testgerät (8) passt,
- ein Testgerät (8,9) für die zu prüfende Komponentenart (Kamera oder Monitor oder Zusatzgerät) an der ausgewählten Anschlussstelle angeschlossen und der Test für diese Komponente und die zur Anschlussstelle führende Kabelstrecke (5a,b) durchgeführt wird, und
- bei einer Fehlermeldung des Testgeräts (8,9) an der zuvor mitgetesteten Komponente (Kamera oder Monitor) direkt angesteckt und der Test wiederholt wird, oder
- bei positivem Testergebnis ein Test der anderen Komponente (Monitor oder Kamera oder Zusatzgerät) und der zur Anschlussstelle führenden Kabelstrecke (5a,b) durchgeführt wird,
- bei einer Fehlermeldung hierbei das Testgerät (8,9) direkt an dieser nunmehr mitgetesteten Komponente (Monitor oder Kamera) angeschlossen und der Test erneut durchgeführt wird.

2. Verfahren nach Anspruch 1,
**dadurch gekennzeichnet, dass**
- beim ersten Test die Anschlussstelle so gewählt wird, dass die zur gewählten Anschlussstelle führende Kabelstrecke von der zu prüfenden Komponente möglichst groß ist, oder
- als Anschlussstelle für den Test der jeweils anderen aktiven Komponente die analoge Anschlussstelle wie beim Prüfen der ersten Komponentenart gewählt wird.

3. Verfahren nach einem der vorhergehenden Ansprüche,
**dadurch gekennzeichnet, dass**
beim Testen der Kamera die Kamera (3a,b...) mit Betriebsspannung vom Kameratestgerät (8) aus versorgt wird.

4. Verfahren nach einem der vorhergehenden Ansprüche,
**dadurch gekennzeichnet, dass**
- beim Testen der Kamera auf Kurzschluss im angeschlossenen Strang getestet wird, und/oder
- beim Testen der Kamera der vom Mikrofon (12) der Kamera (3a, b) empfangene Ton vom Testgerät (8,9) wiedergeben wird, und/oder
- beim Testen der Kamera die automatische Schutzklappe (13) der Kamera (3a, b) auf Funktion getestet wird.

5. Verfahren nach einem der vorhergehenden Ansprüche,
**dadurch gekennzeichnet, dass**
- beim Testen der Kamera die Heizung (14) der Kamera auf Funktion getestet wird, und/oder
- beim Testen der Kamera die Spiegelungs-Funktion der Kamera (3a,b) durch Darstellung im Kameratestgerät (8) dargestellt wird, und/oder
- die Bewegungsfunktion der Kamera (3a, b) getestet wird.

6. Verfahren nach einem der vorhergehenden Ansprüche,
**dadurch gekennzeichnet, dass**
- beim Testen der Kamera gegebenenfalls Sonderfunktionen der Kamera (3a, b) getestet werden, und/oder
- beim Testen der Kamera die Höhe des Videosignalpegels der Kamera (3a,b) und/oder die Bildnorm des Kamerasignals getestet wird.

7. Verfahren nach einem der vorhergehenden Ansprüche,
**dadurch gekennzeichnet, dass**
- beim Testen des Monitors nacheinander mit einem PAL- oder NTSC-Videoausgangssignals beaufschlagt wird, und/oder
- beim Testen des Monitors der Monitor mit einem Signal für ein Farbbalkendiagramm zum manuellen korrekten Farbabgleich des Monitors (4) und zur Bildbeurteilung beaufschlagt wird.

8. Verfahren nach einem der vorhergehenden Ansprüche,
**dadurch gekennzeichnet, dass**
- beim Testen des Monitors der Monitor (4) mit einem Signal für ein Kreistestbild zum manuellen Durchführen eines geometrischen Monitorabgleichs bzw. Bildbeurteilung beaufschlagt wird, und/oder
- beim Testen des Monitors jede Signalbeaufschlagung des Monitors (4) wahlweise von Farbe auf Schwarz-weiß und umgekehrt verstellt werden kann, und/oder
- beim Testen des Monitors der Monitor (4) von wenigstens einen unterschiedlichen Kameraausgang mit unterschiedlichen Testbildern gleichzeitig beaufschlagt wird.

9. Verfahren nach einem der vorhergehenden Ansprüche,
**dadurch gekennzeichnet, dass**
- beim Testen des Monitors im Testbildsignal eine Schrift zur Erkennung der Spiegelbild-Funktion eingeblendet ist, und/oder
- beim Testen des Monitors das Videoausgangssignal abgeschwächt, insbesondere in einer oder mehreren Stufen abgeschwächt, den Monitor (4) beaufschlagt, und/oder
- beim Testen des Monitors der Monitor (4) mit einem über das normale Maß hinaus verstärkten Videoausgangssignal beaufschlagt wird, und/oder
- beim Testen des Monitors der Lautsprecher (16) des Monitors (4) durch Beaufschlagen mit einem Audiosignal getestet wird, und/oder die vom Monitor (4) abgegebene Steuerspannungen, insbesondere für die Schutzklappe, die Kamera (3a,b), die Stromversorgung, die Heizung der Kamera (3a,b) und Sonderfunktionen etc, angezeigt werden.

10. Verfahren nach einem der vorhergehenden Ansprüche,
**dadurch gekennzeichnet, dass**
- bei dem Testen alleine einer Kabelstrecke eine automatische Erkennung der Pinbelegung durchgeführt wird, und/oder
- bei dem Testen alleine einer Kabelstrecke automatisch die Videoader des Kabelstranges erkannt und angezeigt wird, und/oder
- bei dem Testen alleine einer Kabelstrecke angezeigt wird, zu welchem Komponentenhersteller die erkannte Pinbelegung passt, oder insbesondere
- bei dem Testen alleine einer Kabelstrecke ein automatischer Testlauf für die einzelnen Pins (7a,b) des Kabelstranges nacheinander auf Durchgang bzw. Kurzschluss durchgeführt wird, insbesondere auch auf Signalverlust.

11. Testset für Bildverarbeitungssysteme mit Kamera (3a,b), Monitor (4), Kabelstrecken (5a,b), Steckverbindungen (6a,b) und gegebenenfalls Zusatzgeräten, umfassend
- wenigstens ein Testgerät (8,9), insbesondere spezifisch für je eine Art (Kamera (3a,b) oder Monitor (4)) der Systemkomponenten,
- mehrere Adapter (10a,b) für jedes Testgerät (8,9), deren eines Ende (10a1),(10a2) zu dem jeweiligen Testgerät (8,9) passt und deren anderes Ende (10a1), (10a2) zu jeweils einer der möglichen Arten von Steckverbindungen (6a,b) passt.

12. Testset nach Anspruch 11,
**dadurch gekennzeichnet, dass**
das Set ein separates Kabel-Testgerät zum Testen von Kabelstrecken (5a,b) umfasst, an dessen Anschlüssen sämtliche Adapter (10a,b) der anderen Testgeräte (8,9), insbesondere des Monitortestgerätes (9) und des Kameratestgerätes (8) verwendbar sind.

13. Testset nach Anspruch 11 oder 12,
**dadurch gekennzeichnet, dass**
das Kameratestgerät (8) umfasst:
- einen Bildschirm (15),
- eine System-Steckerbuchse (20),
- eine Strombuchse (19),
- eine BNC-Buchse (21), sowie
- Betätigungselemente, insbesondere Schalter, insbesondere Taster für folgende Funktionen:
- Einschalten des Kameratestgerätes, insbesondere einschließlich Unterspannungskontrolle,
- für die Ware einer unterschiedlich hohen Versorgungsspanne von z. B. 9 V, 10, 11 und 12 V, insbesondere bei Leuchtdioden, die bei Kurzschluss blinkt,
- die Klappensteuerung der Kamera,
- die Heizung der Kamera,
- die Spiegelungsfunktion der Kamera,
- das Schwenken der Kamera,
- die Auswahl einer von mehreren Kameras eines Systems,
- eine Auswahltaste für jeweils spezifisch vorgegebene Kamerahersteller,
- wenigstens eine Taste für Sonderfunktionen,
- für Einschalten/Ausschalten des Audiosignals,
- für Wahl des Videopegels mit z. B. 1 V, 0,775 V oder 0,5 V,
- Wahl der Bildnorm Pal/NTSC,
- das Kameratestgerät (8) ferner einen Speicherkarten-Einschub umfasst,
- das Kameratestgerät (8) eine automatische Abschaltfunktion umfasst, die das Gerät nach einer bestimmten, insbesondere wählbaren und einstellbaren, Zeit automatisch abschaltet.

14. Testset nach einem der Ansprüche 11 bis 13,
**dadurch gekennzeichnet, dass**
das Monitortestgerät umfasst:
- wenigstens eine Digitalanzeige (18), insbesondere in Form eines Bildschirms (15):
- eine System-Steckerbuchse (20),
- eine Strombuchse (19),
- eine BNC-Buchse (21), sowie
- eine Buchse (22) für Spannungsmessung und Durchgangsprüfung.
- Betätigungselemente, insbesondere Schalter, insbesondere Taster für folgende Funktionen:
- die Spiegelungsfunktion der Kamera,
- für Einschalten/Ausschalten des Audiosignals,
- Wahl der Bildnorm Pal/NTSC,
- für Abschwächung des Videopegels mit z. b. 100%, 75% und. 50% die Klappensteuerung der Kamera,
- die Heizung der Kamera,
- die Auswahl einer Kameraumschaltfunktion,
- Prüfung eines bestimmten Anbieters,
- für die Funktionsspannungsmessung,
- für die Funktion Farbbalkentestbild
- für die Funktion Normtestbild
- für die Funktion rotes Testbild und/oder blaues Testbild,
- die Bedienelemente an Kameratestgerät und/oder Monitortestgerät jeweils mit einer Funktionskontrolle, insbesondere in Form einer Leuchtdiode, ausgestattet sind.
